# EUROPÄISCHE PATENTSCHRIFT

(11) **EP 2 395 405 B1**
(45) Veröffentlichungstag und Bekanntmachung des Hinweises auf die Patenterteilung: **14.10.2015**
(21) Anmeldenummer: 11004649.7
(22) Anmeldetag: 08.06.2011
(51) Int. Cl.: G01N 21/95, G05B 19/042, B26B 11/00, G06T 7/00

(54) **System und Verfahren zur Überwachung von Werkzeugen**
Method and device for monitoring tools
Dispositif et procédé destinés à la surveillance d'outils

(30) Priorität: 08.06.2010 DE 102010022967
(43) Veröffentlichungstag der Anmeldung: 14.12.2011
(73) Patentinhaber: Johannes Giesser Messerfabrik GmbH, 71364 Winnenden (DE)
(72) Erfinder: Giesser, Hermann, 71364 Winnenden (DE)
(74) Vertreter: WinterLewandowsky

(56) Entgegenhaltungen:
- WO-A1-01/42991
- WO-A1-96/21529
- WO-A1-2009/146681
- DE-A1-102006 012 070
- DE-A1-102008 026 678

## Beschreibung

Die vorliegende Erfindung betrifft ein System zur Überwachung von Werkzeugen mit mindestens einem Werkzeug und mit mindestens einer Überwachungseinheit. Die vorliegende Erfindung betrifft ferner ein Verfahren zur Überwachung mindestens eines Werkzeugs.

Es ist an sich bekannt, Werkzeuge mit einer Kodierung zu versehen, um sie identifizieren und im Falle eines Verlusts wieder auffinden zu können. Dies ist insbesondere in der lebensmittelverarbeitenden Industrie von Bedeutung, da ein Werkzeug, bspw. ein Messer, nicht in eine Lebensmittelcharge geraten darf, um andere Gerätschaften nicht zu beschädigen bzw. das Produkt nicht zu verunreinigen (vgl. EP 1 744 943 B1).

Die deutsche Offenlegungsschrift DE 10 2008 026 678 A1 offenbart ein Handwerkzeug mit einem im Enl integrierten RFID-Chip mit Koppelschleife zur Erfassung der Werkzeug- und Gebrauchsdaten sowie der Werkzeughistorie.

Die deutsche Offenlegungsschrift DE 10 2006 012 070 A1 beschreibt ebenfalls ein Schneidwerkzeug mit einer im Griffteil elektronischen Einrichtung zur Erfassung der Historie des Schneidwerkzeugs, wobei die elektronische Einrichtung ein Sende- und Empfangsteil aufweisen kann.

Die internationale Veröffentlichung WO 1996/021529 A1 zeigt eine Vorrichtung zur Bestimmung eines Messerprofils als verbessertes Kontrollsystem für eine automatisch arbeitende Messerbiegemaschine.

Die internationale Veröffentlichung WO 2009/146681 A1 offenbart ein Verfahren und eine Vorrichtung zur Detektierung bzw. Identifizierung von Metzgerhandwerkzeugen anhand eines im Handwerkzeug eingelassenen Datenträgers.

Die internationale Veröffentlichung WO 2001/042991 A1 offenbart eine Vorrichtung und ein Verfahren zur Identifizierung von Werkzeugen anhand eines am Werkzeug angeordneten Datenträgers.

Die Aufgabe der vorliegenden Erfindung besteht darin, ein derartiges System bzw. ein derartiges Verfahren so weiterzubilden, dass jegliche Beschädigungen anderer Gerätschaften und jegliche Verunreinigungen von Produkten vermieden werden.

Die Lösung besteht in einem System mit den Merkmalen des Patentanspruchs 1 bzw. in einem Verfahren mit den Merkmalen des Patentanspruchs 7.

Das erfindungsgemäße System zur Überwachung von Werkzeugen weist die folgenden Merkmale auf:
- das Werkzeug (11) ist mit mindestens einem detektierbaren Element (12, 12', 12") versehen, welches Daten enthält, die das Werkzeug (11) individualisieren und die von einer Detektionseinrichtung (13, 14) ausgelesen werden können;
- die Überwachungseinheit (20) ist eingerichtet, um zur Durchführung einer Eingangskontrolle das Werkzeug (11) mittels der Detektionseinrichtung (13, 14) zu detektieren und zu identifizieren;
- die Überwachungseinheit (20) ist eingerichtet, um zur Durchführung einer Ausgangskontrolle mittels mindestens einer Kamera (14) eine Abbildung des Werkzeugs (11) in seinem Ist-Zustand zu erstellen, diesen Ist-Zustand mittels eines Rechners (15), in dem mindestens eine Abbildung des Werkzeugs (11) in seinem Soll-Zustand gespeichert ist, mit dem Soll-Zustand zu vergleichen und eine Abweichung des Ist-Zustands vom Soll-Zustand zu signalisieren.

Das erfindungsgemäße Verfahren zur Überwachung mindestens eines Werkzeugs zeichnet sich durch die folgenden Schritte aus:
- Individualisieren des mindestens einen Werkzeugs mittels mindestens eines detektierbaren Elements,
- Durchführen einer Eingangskontrolle, bei welcher das mindestens eine Werkzeug identifiziert wird,
- Durchführen einer Ausgangskontrolle, bei welcher das mindestens eine Werkzeug identifiziert und eine Abbildung des mindestens einen Werkzeugs in seinem Ist-Zustand erstellt wird, die mit einer hinterlegten Abbildung des Werkzeugs in seinem Soll-Zustand verglichen wird,
- Erzeugen eines Signals, wenn der ist-Zustand vom Soll-Zustand abweicht.

Das erfindungsgemäße System bzw. das erfindungsgemäße Verfahren erlauben es erstmals, den Ist-Zustand eines Werkzeugs zu erfassen und auf diese Weise das Werkzeug auf Beschädigungen und Defektstellen zu untersuchen. Damit gelingt es, nicht nur den Verlust des Werkzeugs selbst, sondern auch den Verlust von Teilen des Werkzeugs festzustellen und daraus resultierende Folgeschäden zu vermeiden. So kann bspw. in der lebensmittelverarbeitenden Industrie ein Messer mit einer abgebrochenen Klingenspitze detektiert und der Arbeitsprozess unterbrochen werden, um die Klingenspitze aufzufinden und die Verunreinigung der betreffenden Lebensmittelcharge zu beheben.

Schließlich kann der Inhaber des mindestens einen Werkzeugs zur Verantwortung gezogen werden, falls er eine Beschädigung während seiner Arbeitszeit nicht meldet.

Vorteilhafte Weiterbildungen ergeben sich aus den Unteransprüchen.

Eine besonders bevorzugte Weiterbildung sieht vor, dass eine Eingangskontrolle vorgenommen wird, bei der der Ist-Zustand des mindestens einen Werkzeugs überprüft wird, indem der Ist-Zustand mit einem ursprünglichen Soll-Zustand verglichen wird. Insbesondere wird überprüft, ob das mindestens eine Werkzeug Beschädigungen und Defektstellen aufweist, ob es Verschmutzungen aufweist und ob sein Erscheinungsbild den Vorschriften entspricht, bspw. ein Messer nicht eine zu schmale Klingenspitze nach DIN EN aufweist. Wenn das Werkzeug als einwandfrei erkannt worden ist, wird seine Abbildung als neuer Soll-Zustand definiert und hinterlegt. Bei der Ausgangskontrolle wird ein neuer Ist-Zustand erfasst und mit dem vorher definierten neuen Soll-Zustand verglichen. Bei Abweichungen des Ist-Zustands vom Soll-Zustand wird ein Signal erzeugt. Dieses Verfahren ist besonders bei der Überwachung von Messern von Vorteil, da mehrfach geschliffene Messer vom fabrikneuen Zustand deutlich abweichen, aber dennoch in einwandfreiem Zustand sein können.

Diese Weiterbildung erlaubt auch eine Eingangskontrolle daraufhin, ob ein vorschriftsmäßiges Werkzeug vorliegt. In der fleischverarbeitenden Industrie bspw. wird oft in jeder Schicht ein Werkzeug, insbesondere ein Messer, mit einem andersfarbigen Griff verwendet, um Hygiene- und sonstige Kontrollmaßnahmen zu überwachen. Auf diese Weise können nicht vorschriftsmäßige Werkzeuge identifiziert und aus dem Arbeitsprozess genommen werden.

Selbstverständlich kann der Ist-Zustand des mindestens einen Werkzeugs während des Arbeitsprozesses mittels mindestens einer Zwischenkontrolle erfasst werden, so dass Beschädigungen und Defektstellen umgehend erkannt werden. Ferner wird sichergestellt, dass stets mit einwandfreien Werkzeugen gearbeitet wird.

Das Signal, das bei Abweichungen des Ist-Zustands vom Soll-Zustand erzeugt wird, kann bspw. ein optisches und/oder akustisches Warnsignal sein. Ferner ist es zweckmäßig, eine Zugangs- bzw. Ausgangsbarriere einzurichten, so dass ein Werkzeug mit einer Beschädigung oder Defektstelle bzw. ein nicht vorschriftsmäßiges Werkzeug umgehend aus dem Arbeitsprozess entfernt werden kann.

Das Werkzeug kann insbesondere mit einem Datenspeicher, wie einem Transponder, einem Mikrochip, einem Barcodestreifen und/oder einem Magnetstreifen und/oder mit einem Identifizierungscode (bspw. einer Zahlen- und/oder Buchstabenkombination) versehen sein. Wesentlich ist, dass das Werkzeug mit einem Code versehen ist, der das Werkzeug individualisiert und/oder dass ein Datenspeicher vorgesehen ist, auf dem die das Werkzeug individualisierenden Daten gespeichert und auslesbar sind.

Im Rechner sind ferner vorzugsweise Daten zur Individualisierung des mindestens einen Werkzeugs gespeichert, die mit der Abbildung des individualisierenden Codes bzw. mit den aus dem Datenspeicher ausgelesenen Daten abgeglichen werden können, um das mindestens eine Werkzeug zu identifizieren. Zweckmäßigerweise ist in dem Rechner eine Datenbank mit Abbildungen verschiedener Werkzeuge gespeichert.

Die mindestens eine Kamera kann auch dazu dienen, eine Abbildung eines das mindestens eine Werkzeug individualisierenden Codes zu erstellen, mittels dessen das Werkzeug identifiziert werden kann. Dies kann bspw. durch einen Abgleich des individualisierenden Codes mit einer Sammlung der Codes aller Werkzeuge geschehen, die im Betrieb verwendet werden.

Zweckmäßigerweise können zwei oder mehr Kameras vorgesehen sein, die Abbildungen des mindestens einen Werkzeugs aus verschiedenen Perspektiven erstellen. Im Rechner können diese Abbildungen dann zu einer einzigen Abbildung zusammengeführt werden, wobei in vorteilhafter Weise Störstellen wie bspw. Gitterstäbe eines Aufnahmekorbes für das mindestens eine Werkzeug, herausgerechnet werden können, um eine vollständige Abbildung des mindestens einen Werkzeugs zu erhalten.

Das erfindungsgemäße System und das erfindungsgemäße Verfahren eignen sich für alle Arten von Werkzeugen, besonders gut jedoch für die lebensmittelverarbeitende, bspw. die fleischverarbeitende Industrie. Das Werkzeug kann insbesondere ein Messer, bevorzugt ein Messer zur Fleischverarbeitung, sein.

Ein Ausführungsbeispiel der vorliegenden Erfindung wird im Folgenden anhand der beigefügten Zeichnungen näher beschrieben. Es zeigen in schematischer, nicht maßstabsgetreuer Darstellung:

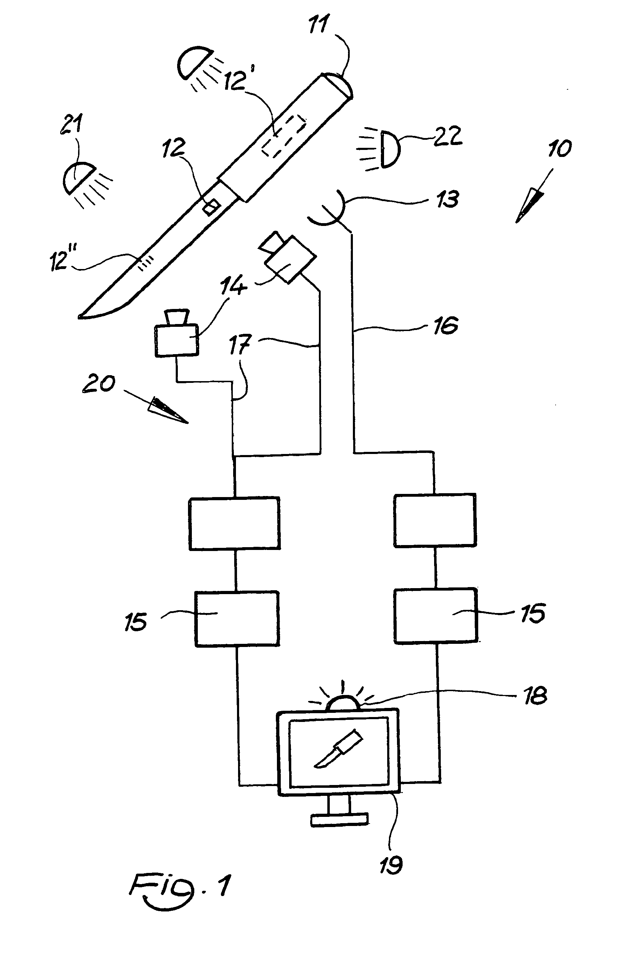

- Figur 1: ein Ausführungsbeispiel eines erfindungsgemäßen Systems zur Überwachung mindestens eines Werkzeugs;
- Figur 2: ein Ausführungsbeispiel eines Aufnahmekorbs zur Aufnahme von Messern.

Das System 10 weist ein Werkzeug 11 und eine Überwachungseinheit 20 auf. Das Werkzeug 11 ist im Ausführungsbeispiel ein Messer zur Fleischverarbeitung. Das Werkzeug 11 ist mit mindestens einem detektierbaren Element 12, 12', 12" versehen. Hierfür können verschiedene Datenspeicher zum Einsatz kommen, wie bspw. ein Transponder 12 oder ein Magnetstreifen 12'. Auch ein sonstiger Mikrochip oder ein Barcodestreifen sind geeignet (nicht dargestellt). Ferner kann ein Identifizierungscode 12" (bspw. eine Zahlen- und/oder Buchstabenkombination) auf dem Werkzeug 11 aufgebracht sein. Wesentlich ist, dass das detektierbare Element 12, 12' 12" Daten enthält, die das Werkzeug 11 individualisieren und die von einer geeigneten Detektionseinrichtung 13, 14 ausgelesen werden können, um das Werkzeug zu identifizieren. Ein Transponder oder ein Mikrochip können aktiv Daten aussenden, die von der Detektionseinrichtung 13 empfangen werden. Es können auch ein passiver Transponder bzw. ein passiver Mikrochip verwendet werden, wobei die Detektionseinrichtung 13 Signale aussendet, um die Daten auszulesen. Als Detektionseinrichtung 13 können ferner - auch zusätzlich - ein Barcodeleser und/oder ein Magnetstreifenleser vorgesehen sein. Zum Detektieren eines Identifizierungscodes 12" ist bspw. eine Kamera 14 geeignet. Die gespeicherten Daten können bspw. eine Werkzeugnummer, den Namen des Inhabers, die Herstellerfirma, Einsatzzeiten, Wartungsintervalle etc. umfassen.

Das System 10 weist ferner im Ausführungsbeispiel zwei Kameras 14 auf, die Abbildungen des Werkzeugs 11 in seinem Ist-Zustand aus verschiedenen Perspektiven erstellen. Natürlich können auch mehr als zwei Kameras eingesetzt werden. Um eine möglichst optimale Qualität der Abbildungen zu erzeugen, kann mindestens ein Leuchtkörper 21 zur Erzeugung einer Hintergrundbeleuchtung zur Erzeugung eines möglichst gleichmäßigen Hintergrundes vorgesehen sein, so dass insbesondere die Kontur des Werkzeugs erfasst werden kann. Wenn eine Kamera 14 auch zur Erfassung eines Identifizierungscodes und/oder der Färbung des Werkzeugs 11 dient, kann mindestens ein kameraseitig angebrachter Leuchtkörper 22 zum Ausleuchten des Identifizierungscodes 12" vorgesehen sein. Zur besseren Lesbarkeit kann der Identifizierungscode 12" auf einem mattierten Untergrund angeordnet sein, um einen besonders guten Kontrast zwischen dem Identifizierungscode 12" und dem Untergrund zu erzeugen.

Diese Bilderfassung kann nicht nur bei der Ausgangskontrolle des Werkzeugs 11, sondern auch bei der Eingangskontrolle und während des Arbeitsprozesses erfolgen, um den Ist-Zustand des Werkzeugs 11 möglichst kontinuierlich zu dokumentieren und Beschädigungen oder Defektstellen umgehend zu erfassen.

Ferner ist ein Rechner 15 mit einem Bildschirm 19 vorgesehen. Im Rechner 15 ist im Ausführungsbeispiel eine Datenbank mit Abbildungen verschiedener Werkzeuge in ihrem Soll-Zustand, bspw. in fabrikneuem Zustand oder in einem individuell definierten einwandfreien Zustand, gespeichert. Zweckmäßigerweise sind jeder Abbildung die Daten zugeordnet, welche die im Einsatz befindlichen Werkzeuge 11 mittels des mindestens einen detektierbaren Elements 12, 12', 12" individualisieren. Sind bspw. von einem Werkzeug vom Typ X sieben Exemplare im Einsatz, enthält das detektierbare Element 12, 12', 12" jedes Werkzeugs 11 einen dieses Werkzeug 11 individualisierenden Datensatz. In der Datenbank sind der Abbildung dieses Werkzeugs 11 in seinem fabrikneuen Soll -Zustand diese sieben Datensätze zugeordnet, bzw. ist jeder Abbildung eines dieser sieben Werkzeuge in seinem aktuellen einwandfreien Zustand sein ihm zugehöriger Datensatz zugeordnet.

Der Rechner 15 ist sowohl mit der Detektionseinrichtung 13 als auch mit den Kameras 14 über Datenleitungen 16, 17 verbunden. Die von der Detektionseinrichtung 13 ausgelesenen bzw. von der Kamera 14 erfassten Daten des Werkzeugs 11 und die mit den Kameras 14 erstellten Abbildungen des Werkzeugs 11 in seinem Ist-Zustand werden auf den Rechner 15 übertragen. Die beiden Kameras 14 dienen im Ausführungsbeispiel dazu, die Abbildungen des mindestens einen Werkzeugs aus verschiedenen Perspektiven erstellen. Im Rechner 15 werden diese Abbildungen zu einer einzigen Abbildung zusammengeführt. Dabei werden Störstellen, also Lücken in den Abbildungen, die von Elementen verursacht werden, die das Werkzeug 11 teilweise verdecken, herausgerechnet. Auf diese Weise kann eine vollständige Abbildung des Werkzeugs 11 erhalten werden.

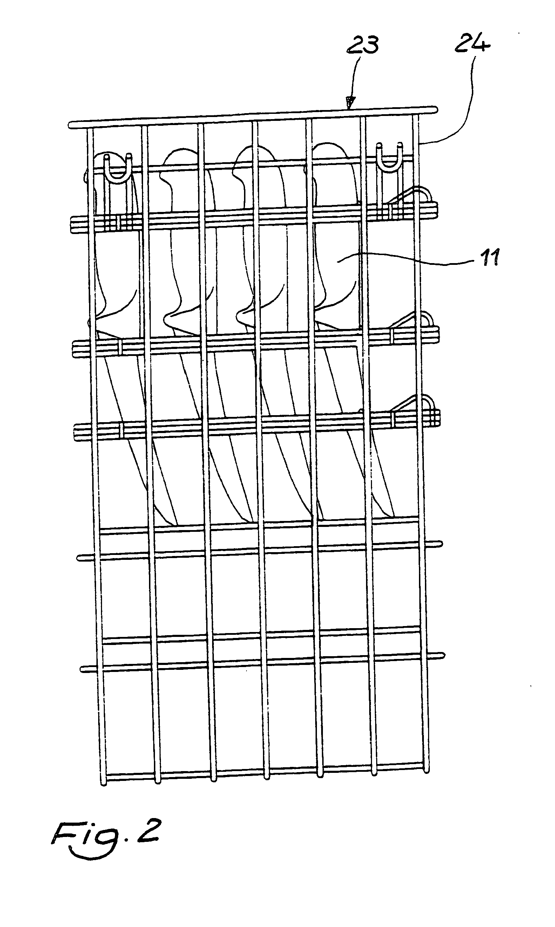

Im Falle von Messern können insbesondere Gitterstäbe 24 eines Aufnahmekorbes 23 oder Sammelkorbes (vgl. Figur 2) für die Messer Störstellen verursachen. Derartige Aufnahmekörbe 23 oder Sammelkörbe sind an sich bekannt und dienen insbesondere dazu, eine Mehrzahl von Messern in einer Spülvorrichtung aufnehmen, um diese zu reinigen.

Der Rechner 15 ist mit einer an sich bekannten Software versehen, die die von der Detektionseinrichtung 13 ausgelesenen bzw. von der Kamera 14 erfassten Daten des Werkzeugs 11 mit den in der Datenbank hinterlegten Datensätzen vergleicht, auf diese Weise die Abbildung des Werkzeugs 11 in seinem Soll-Zustand auswählt und diese Abbildung mit der von den Kameras 14 erstellten Abbildungen des Werkzeugs 11 in seinem Ist-Zustand vergleicht. Wenn die beiden Abbildungen nicht übereinstimmen, wird ein optisches und/oder akustisches Signal 18 erzeugt. Ferner kann der Zugang des Werkzeuginhabers zum Arbeitsplatz bzw. der Weggang des Werkzeuginhabers vom Arbeitsplatz gesperrt werden, bis geklärt ist, ob ein Schaden vorliegt, der ein Unterbrechen des Arbeitsprozesses erfordert.

In einem weiteren Ausführungsbeispiel der vorliegenden Erfindung wird eine Eingangskontrolle vorgenommen, bei der der Ist-Zustand des mindestens einen Werkzeugs überprüft wird, indem der Ist-Zustand mit einem ursprünglichen Soll-Zustand verglichen wird. Dieser ursprüngliche Soll-Zustand kann bspw. der Zustand des Werkzeugs 11 sein, wie er sich am Ende des vorangegangenen Arbeitsprozesses ergeben hat. Dieser ursprüngliche Soll-Zustand stellt einen einwandfreien und vorschriftsmäßigen Zustand des Werkzeugs 11 dar, der jedoch nicht dem fabrikneuen Zustand entsprechen muss. Dies ist besonders bei der Überwachung von Messern von Bedeutung, da mehrfach geschliffene Messer vom fabrikneuen Zustand deutlich abweichen können, aber dennoch in einwandfreiem Zustand sind.

Bei der Eingangskontrolle gemäß diesem Ausführungsbeispiel wird überprüft, ob das Werkzeug 11 Beschädigungen und Defektstellen aufweist, ob es Verschmutzungen aufweist und ob sein Erscheinungsbild den Vorschriften entspricht. Bei einem Messer kann es sich dabei um die Abmessungen der Klingenspitze handeln, da eine DIN-Norm wie bspw. EN ISO 13998 zu schmale Klingenspitzen verbietet. Bei den erwähnten Vorschriften kann es sich aber auch um betriebsinterne Vorschriften handeln, bei einem Messer bspw. die Farbe des Griffs. In der fleischverarbeitenden Industrie bspw. wird oft in jeder Schicht ein Messer mit einem andersfarbigen Griff verwendet, um Hygiene- und sonstige Kontrollmaßnahmen zu überwachen. Auf diese Weise können nicht vorschriftsmäßige Werkzeuge 11 identifiziert und aus dem Arbeitsprozess genommen werden.

Wenn das Werkzeug 11 bei einer Eingangskontrolle gemäß diesem Ausführungsbeispiel als einwandfrei erkannt worden ist, wird seine Abbildung als neuer Soll-Zustand definiert und im Rechner 15 hinterlegt. Bei der Ausgangskontrolle wird ein neuer Ist-Zustand des Werkzeugs 11 erfasst und mit dem vorher definierten neuen Soll-Zustand verglichen. Bei Abweichungen des Ist-Zustands vom Soll-Zustand wird ein Signal erzeugt.

Mit dem erfindungsgemäßen System und dem erfindungsgemäßen Verfahren können selbst geringste Beschädigungen und Defektstellen des Werkzeugs 11 umgehend erfasst und Folgeschäden wirksam verhindert werden.

## Patentansprüche

1. System (10) zur Überwachung von Werkzeugen (11), mit mindestens einem Werkzeug (11) und mit mindestens einer Überwachungseinheit (20), **gekennzeichnet durch** die folgenden Merkmale:
- das Werkzeug (11) ist mit mindestens einem detektierbaren Element (12, 12', 12") versehen, welches Daten enthält, die das Werkzeug (11) individualisieren und die von einer Detektionseinrichtung (13, 14) ausgelesen werden können;
- die Überwachungseinheit (20) ist eingerichtet, um zur Durchführung einer Eingangskontrolle das Werkzeug (11) mittels der Detektionseinrichtung (13, 14) zu detektieren und zu identifizieren;
- die Überwachungseinheit (20) ist eingerichtet, um zur Durchführung einer Ausgangskontrolle mittels mindestens einer Kamera (14) eine Abbildung des Werkzeugs (11)in seinem Ist-Zustand zu erstellen, diesen Ist-Zustand mittels eines Rechners (15), in dem mindestens eine Abbildung des Werkzeugs (11) in seinem Soll-Zustand gespeichert ist, mit dem Soll-Zustand zu vergleichen und eine Abweichung des Ist-Zustands vom Soll-Zustand zu signalisieren.

2. System nach Anspruch 1, **dadurch gekennzeichnet, dass** das mindestens eine detektierbare Element ein Datenspeicher (12, 12') oder ein Identifizierungscode (12") ist.

3. System nach Anspruch 2, **dadurch gekennzeichnet, dass** die Detektionseinrichtung (13, 14) ein Lesegerät (13) für einen Datenspeicher (12, 12') oder eine Kamera (14) ist.

4. System nach Anspruch 1, **dadurch gekennzeichnet, dass** zwei oder mehr Kameras (14) vorgesehen sind, die Abbildungen des mindestens einen Werkzeugs (11) aus verschiedenen Perspektiven erstellen.

5. System nach Anspruch 1, **dadurch gekennzeichnet, dass** im Rechner (15) Individualisierungsdaten des mindestens einen Werkzeugs (11) enthalten sind.

6. System nach einem der vorhergehenden Ansprüche, **dadurch gekennzeichnet, dass** das mindestens eine Werkzeug (11) ein Messer, bevorzugt ein Messer zur Fleischverarbeitung, ist.

7. Verfahren zur Überwachung mindestens eines Werkzeugs (11), mit den folgenden Schritten:
- individualisieren des mindestens einen Werkzeugs (11) mittels mindestens eines detektierbaren Elements (12, 12', 12''),
- Durchführung einer Eingangskontrolle, bei der das mindestens eine Werkzeug (11) identifiziert wird,
- Durchführen einer Ausgangskontrolle, bei welcher das mindestens eine Werkzeug (11) identifiziert und eine Abbildung des mindestens einen Werkzeugs (11) in seinem Ist-Zustand erstellt wird, die mit einer hinterlegten Abbildung des Werkzeugs (11) in seinem Soll-Zustand verglichen wird,
- Erzeugen mindestens eines Signals (18), wenn der Ist-Zustand vom Soll-Zustand abweicht.

8. Verfahren nach Anspruch 8, **dadurch gekennzeichnet, dass** bei der Eingangskontrolle eine Abbildung des mindestens einen Werkzeugs (11) in seinem Eingangszustand erstellt wird, die mit einer hinterlegten Abbildung des Werkzeugs (11) in seinem Soll-Zustand verglichen wird, und dass mindestens ein Signal (18) erzeugt wird, wenn der Eingangszustand vom Soll-Zustand abweicht.

9. Verfahren nach Anspruch 8, **dadurch gekennzeichnet, dass** die bei der Eingangskontrolle erstellte Abbildung des mindestens einen Werkzeugs (11) in seinem Eingangszustand als Abbildung eines neuen Soll-Zustands definiert und hinterlegt wird und der Ausgangskontrolle als Abbildung des Soll-Zustands zugrunde gelegt wird.

10. Verfahren nach einem der Ansprüche 7 bis 9, **dadurch gekennzeichnet, dass** mindestens eine Zwischenkontrolle durchgeführt wird, bei welcher das mindestens eine Werkzeug (11) identifiziert und eine Abbildung des mindestens einen Werkzeugs (11) in einem Zwischenzustand erstellt wird, die mit einer hinterlegten Abbildung des Werkzeugs (11) in seinem Soll-Zustand verglichen wird, und dass mindestens ein Signal (18) erzeugt wird, wenn der Zwischenzustand vom Soll-Zustand abweicht.

11. Verfahren nach einem der Ansprüche 7 bis 10, **dadurch gekennzeichnet, dass** ein optisches und/oder akustisches Signal (18) erzeugt wird.

12. Verfahren nach Anspruch 11, **dadurch gekennzeichnet, dass** eine Zugangs- oder Ausgangsbarriere eingerichtet wird.

## Claims

1. System (10) for monitoring of tools (11), with at least one tool (11) and with at least one monitoring unit (20), **characterized by** the following features:
- the tool (11) is provided with at least one detectable element (12, 12', 12") which contains data that individualize said tool (11) and that can be read out by a detection device (13, 14);
- the monitoring unit (20) is configured, in order to perform an incoming inspection, to detect and identify said tool (11) by means of the detection device (13);
- the monitoring unit (20) is configured, in order to perform an exit control, to produce an image of said tool (11) in its current state, to compare said current state with a target state, by means of a data processor (15) having stored at least one image of said tool (11) in its target state, and to signalize a deviation of the current state from the target state.

2. System according to claim 1, **characterized in that** the at least one detectable element is configured as a data storage device (12, 12') or an identification code (12").

3. System according to claim 2, **characterized in that** the detection device (13, 14) is configured as a reader device (13) for a data storage device (12, 12') or as a camera (14).

4. System according to claim 1, **characterized in that** two or more cameras (14) are provided, which create images of the at least one tool (11) from different perspectives.

5. System according to claim 1, **characterized in that** individualizing data of the at least one tool (11) are stored in the data processor (15).

6. System according to at least one of the precedent claims, **characterized in that** the at least one tool (1) is a knife, preferably a knife for meat processing.

7. Method for monitoring of at least one tool (11), comprising the following steps:
- individualizing the at least one tool (11) by means of at least one detectable element (12, 12', 12");
- performing an incoming inspection to identify said at least one tool (11);
- performing an exit control, which identifies the at least one tool (11), and which produces an image of said at least one tool (11) in its current state, said image being compared with a stored image of said one tool (11) in its target state;
- generating at least one signal (18) in case of a deviation of the current state from the target state.

8. Method according to claim 8, **characterized in that** during the incoming inspection an image of the at least one tool (11) in its incoming state is produced, said image being compared with a stored image of said (11) in its target state, and that at least one signal (18) is generated in case of a deviation of the incoming state from the target state.

9. Method according to claim 8, **characterized in that** the image of the at least one tool (11) produced during the incoming control is redefined and stored as an image of a new target state and that the exit control is based on said image as image of the target state.

10. Method according to any of the claims 7 to 9, **characterized in that** at least one intermediate inspection is performed, which identifies the at least one tool (11) and produces an image of said at least one tool (11) in an intermediate state, and said image being compared with a stored image of said tool (11) in its target state, and that at least one signal (18) is generated in case of a deviation of the intermediate state from the target state.

11. Method according to any of the claims 7 to 10, **characterized in that** an optical and/or acoustic signal (18) is generated.

12. Method according to claim 11, **characterized in that** an access barrier or an exit barrier is provided.

## Revendications

1. Système pour la surveillance d'outils (11), avec au moins un outil (11), et avec au moins une unité de surveillance (20), **caractérisé par** les caractéristiques suivantes:
- l'outil (11) est équipé de au moins un élément détectable (12, 12', 12"), qui contient des données individualisant l'outil (11) et extractible par un moyen de détection (13, 14);
- l'unité de surveillance (20) est configurée, pour l'exécution d'un contrôle d'entrée, pour identifier et détecter l'outil (11) avec le moyen de détection (13, 14);
- l'unité de surveillance (20) est configurée, pour l'exécution d'un contrôle de sortie, pour générer une image de l'outil (11) à son état actuel, pour comparer c'état actuel avec un état de consigne, au moyen d'un ordinateur (15) dans lequel au moins une image de l'outil (11) à son état de consigne est stockée, et pour signaliser un écart de l'état actuel par rapport à l'état de consigne.

2. Système selon la revendication 1, **caractérisé en ce que** le au moins un élément détectable est un moyen de stockage de données (12, 12') ou un code d'identification.

3. Système selon la revendication 2, **caractérisé en ce que** le moyen de détection est un lecteur (13) pour un moyen de stockage de données ou une caméra (14).

4. Système selon la revendication 1, **caractérisé en ce que** deux ou plusieurs caméras (14) sont prévues, qui génèrent des images d'au moins un outil (11) à partir des perspectives différentes.

5. Système selon la revendication 1, **caractérisé en ce que** dans l'ordinateur (15), des données d'individualisation sont stockées.

6. Système selon l'une quelconque des revendications précédentes, **caractérisé en ce que** le au moins un outil (11) est un couteau, de préférence un couteau de transformation de viandes.

7. Procédé de la surveillance d'au moins un outil (11), avec les étapes suivantes:
- individualiser d'au moins un outil (11) au moyen de au moins un élément détectable (12, 12', 12");
- exécuter d'un contrôle d'entrée, dans lequel l'au moins un outil (11) est identifié;
- exécuter d'un contrôle de sortie dans lequel l'au moins un outil (11) est identifié et dans lequel une image de l'au moins un outil (11) à son état actuel est générée, qui est comparée avec une image stockée de l'outil (11) à son état de consigne;
- générer d'au moins un signal (18) lorsque l'état actuel diffère de l'état de consigne.

8. Procédé selon la revendication 8, **caractérisé en ce que** dans le contrôle d'entrée, une image de l'au moins un outil (11) à son état entrée est générée, qui est comparée avec une image stockée de l'outil (11) à son état de consigne, et **en ce que** au moins un signal (18) est généré lorsque l'état entrée diffère de l'état de consigne.

9. Procédé selon la revendication 8, **caractérisé en ce que** l'image de l'au moins un outil (11) à son état entrée générée dans le contrôle d'entrée est redéfinie et stockée comme une image d'un état de consigne nouveau et, pour exécuter le contrôle de sortie, on prend pour base l'image d'état de consigne nouveau.

10. Procédé selon l'une quelconque des revendications 7 à 9, **caractérisé en ce que** au moins un contrôle intermédiaire est exécuté, dans lequel l'au moins un outil (11) est identifié et dans lequel une image de l'au moins un outil (11) à un état intermédiaire est générée, qui est comparée avec une image stockée de l'outil (11) à son état de consigne, et que au moins un signal (18) est généré lorsque l'état intermédiaire diffère de l'état de consigne.

11. Procédé selon l'une quelconque des revendications 7 à 10, **caractérisé en ce que** un signal (18) visuel ou sonore est généré.

12. Procédé selon la revendication 11, **caractérisé en ce que** une barrière d'accès ou une barrière de sortie est prévue.
